Europäisches Patentamt

(19) European Patent Office

Office européen des brevets

(11) Numéro de publication: **0 199 722**
**B1**

(12) **FASCICULE DE BREVET EUROPEEN**

(45) Date de publication du fascicule du brevet: **25.04.90**

(51) Int. Cl.⁵: **A 01 G 1/00**

(21) Numéro de dépôt: **84904135.5**

(22) Date de dépôt: **05.11.84**

(86) Numéro de dépôt international:
**PCT/FR84/00249**

(87) Numéro de publication internationale:
**WO 86/02804 22.05.86 Gazette 86/11**

(54) **Support de culture pour gazon et utilisation de ce support.**

(43) Date de publication de la demande:
**05.11.86 Bulletin 86/45**

(45) Mention de la délivrance du brevet:
**25.04.90 Bulletin 90/17**

(84) Etats contractants désignés:
**GB**

(56) Documents cités:
**CH-A- 548 152
DE-A-2 055 733
FR-A-2 183 087
US-A-3 009 289**

(73) Titulaire: **THIEN AH KOON, André
27ème Km - Bourg Murat 10 route du Volcan
F-97418 Plaine Des Cafres Ile de la Réunion (FR)**

(72) Inventeur: **THIEN AH KOON, André
27ème Km - Bourg Murat 10 route du Volcan
F-97418 Plaine Des Cafres Ile de la Réunion (FR)**

(74) Mandataire: **Barre, Philippe
Cabinet Barre-Gatti-Laforgue 95 rue des
Amidonniers
F-31069 Toulouse Cédex (FR)**

Courier Press, Leamington Spa, England.

**Description**

L'invention concerne un nouveau support de culture et son utilisation.

L'intérêt de mettre en oeuvre un gazon en plaques lors de la création d'espaces verts ou de création de terrains de sports a toujours été confronté à des coûts de transport, de manutention et des freins psychologiques inhérents à la dégradation naturelle de l'environnement (gazon en mottes de terre).

Pour ce faire, divers systèmes sont utilisés pour produire du gazon par plaques ou en tapis:
— soit par prélèvement dans la nature par transplantation de mottes,
— soit par culture dans du substrat,
— soit dans un support de billes de polystyrène en suspension (brevet français n° 72.03670),
— soit par culture dans de l'écorce d'arbres broyée (brevet français n° 76.36574),
— soit encore par utilisation de support de matière biodégradable genre polyuréthane souple expansé dans lequel la gazon est placé en deux couches et déposé directement sur le sol naturel pour l'obtention d'un tapis (système Westmill GB),
— soit enfin par utilisation d'un support obtenu à partir de fil de lin dans lequel les graines sont placées en sandwich et déposé sur un sol imperméable de culture (voir notamment le brevet européen n° 35953 correspondant au brevet français n° 2 477 830).

Ces méthodes ne sont pas adaptées économiquement aux pays éloignés de centres industriels producteurs de matières premières.

L'invention concerne plus particulièrement les pays chauds producteurs de canne à sucre, où le sous-produit de canne à sucre peut constituer un élément de valorisation de cette culture.

La demande Européenne numéro 84904136 constitue un état de la technique selon l'article 54(3) EPC, et préconise, l'utilisation d'ecume de canne à sucre ou tourteau à l'état pur ou mélangée à des déchets issus du cycle de production de sucre de canne.

Dans le cadre de la présente invention, il a été découvert un support de culture pour la culture de gazon en plaques ou en tapis contenant des graines ou des rhizomes, constitué essentiellement de bagasse de canne à sucre broyée, celle-ci étant avantageusement mélangé à de la cendre de canne issue de fours de régénération.

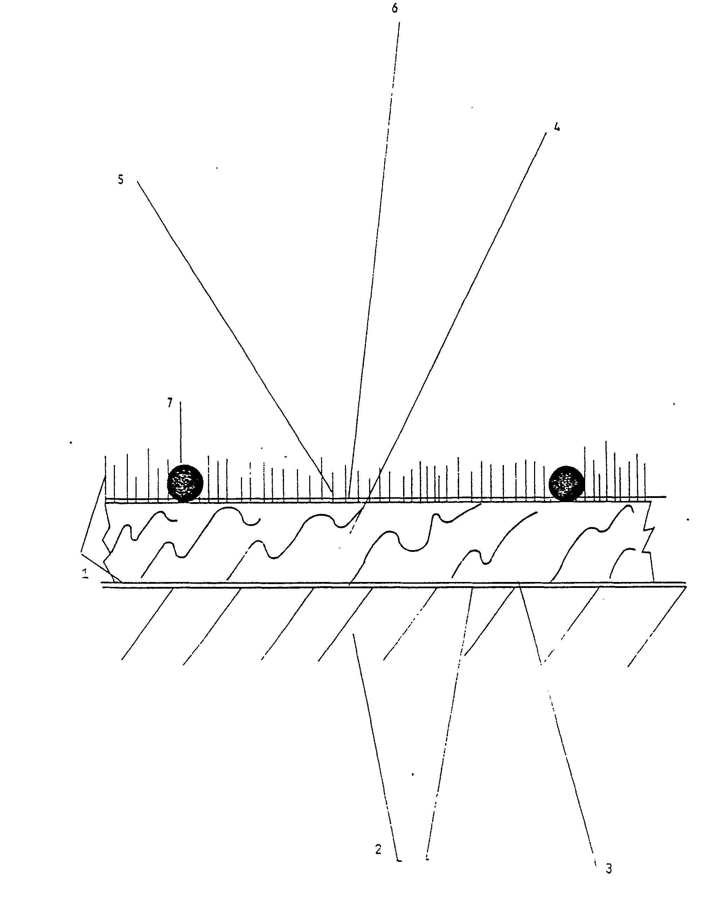

La figure 1 schématique un tel support de culture 1 en place sur un sol 2. Le support est constitué de bagasse de canne à sucre 4 récupérée à l'usine, complétée éventuellement de cendre de bagasse sous-produit du four de générateur et est utilisé après un émiettement éventuel en cas de formation de mottes provoquées par le stockage. Les dimensions des fibres de la bagasse sont celles qui sont issues du moulin de broyage de la canne à sucre et ont environ 1 à 4 centimètres de longueur tandis que la cendre de bagasse a une granulométrie de 0,5 à 1 mm environ. Le support est déposé sur le sol 2 préalablement nivelé et compacté et revêtu d'un film plastique souple 3.

L'épaisseur du support de bagasse est de 2 à 6 cm, son poids est de 2 kgs à 3 kgs/m². On peut ajouter à la bagasse de la cendre provenant du four du générateur de l'usine sucrière dans une proportion de 30 à 50%.

La bagasse est prélevée à l'usine sucrière et est stockée en vue d'être utilisée directement si la décomposition naturelle est suffisante ou après décomposition provoquée par utilisation d'un produit chimique genre ACTILEX, produit connu des jardiniers. Si le pH neutre n'est pas atteint, une correction du taux du pH peut être effectuée par apport de chaux calcaire.

Lorsque le support est déposé sur le sol, manuellement ou mécaniquement, les graines de gazon sont déposées uniformément au moyen d'un semoir pneumatique ou mécanique dans une proportion de 20 à 100 grammes par m² selon les variétés choisies de gazon. S'il s'agit de rhizomes, ces derniers sont piqués manuellement ou mécaniquement dans le support à raison de 50 à 100 boutures/m².

Dans les régions ventées, afin de piéger les graines ou les rhizomes de gazon et la bagasse et afin de rendre les plantules plus solidaires, il est placé sur le support de bagasse un filet 6 en polyéthylène biodégradable ou pas dont les mailles auront une dimension de 5 mm à 20 mm de côté (opération facultative).

La germination des graines ainsi que la croissance de jeunes plants se font dans des conditions optimum en raison des conditions favorables qui sont réunies du fait que la bagasse est une fibre très légère, sa capacité de rétention en eau étant importante et la matière nutritive en suspension apportée par l'irrigation ou sous forme solide constituant des conditions idéales de croissance végétale. Dans de telles conditions, la décomposition de la bagasse est accélérée.

Concernant le tapis de gazon obtenu par semis, dès lors que les apports d'engrais sous les formes liquides ou solides sont effectués au taux de 5 à 40 grammes de matières nutritives évaluées à l'état sec (apports faits mensuellement), la première tonte du gazon peut être effectuée à 4 semaines environ; la commercialisation peut intervenir après 5 à 6 tontes, soit entre 3 à 5 mois selon l'intensité d'ensoleillement ou de la température ambiante. Par contre, la culture par rhizomes implique une culture de 16 à 24 semaines. Le gazon étant prélevé sans la lèse de plastique séparant la culture du sol naturel et découpé en bandes ou en carrés, est prêt à être transporté et stocké pendant 8 jours sans pour autant que la croissance en soit compromise.

Pour maintenir une solidarité entre le support de bagasse 4 et le filet 6: il est déposé sur le filet des cailloux 7 ou des tringles de bois ou des fiches métalliques qui empêchent le filet d'être déplacé par le vent. Ensuite, les matériaux ci-dessus sont enlevés dès que le gazon 5 a traversé le filet. Ce dernier est donc placé au-dessus du support de culture et au-dessous des pousses de gazon, c'est-à-dire au niveau du collet du végétal.

Cette façon de procéder empêche les graines, les rhizomes et les fibres de bagasse d'être emportés par le vent et rend la masse du tapis plus solidaire au départ de la végétation par le fait que les pousses de gazon ont traversé les mailles du filet.

Le tapis de gazon ainsi formé à base de bagasse a l'avantage de former un tapis solide et présente les qualités de résistance mécanique suffisante pour supporter les manipulations et les transplantations. La biodégradation de la bagasse intervenant dans une période de 2 ans environ libère les éléments favorables à la pousse des végétaux.

Lorsque les opérations de mise en place du support sont terminées, un arrosage régulier afin d'y maintenir une humidité constante est pratiqué ainsi qu'un apport d'éléments nutritifs pour assurer une bonne reprise des semis et des rhizomes ainsi qu'une bonne végétation; il est utilisé de l'engrais soluble ou liquide qu'on trouve dans les établissements spécialisés. L'arrosage est fait de telle façon qu'une humidité constante soit maintenue sans noyer la masse dans l'eau.

Compte tenu du faible poids un m² du tapis qui pèse environ 6 kgs au m², des avantages économiques appréciables sont constatés au niveau du transport qui peut se faire sans inconvénient particulier. Fort de cet atout par rapport au volume et à la résistance du produit fabriqué, les conditions mécaniques sont réunies pour manipuler le produit de façon normale.

La pose du tapis se fait dans les mêmes conditions que celles requises pour la pose d'un gazon par plaques prélevé dans la nature ou produit par tout autre procédé de placage.

Le rassemblement des plaques est réalisé suivant le système de découpe qui est choisi lors de l'enlèvement sur le terrain de culture en carrés ou en bandes. Le tapis peut être utilisé dans les sols plats ou inclinés. La rétention en eau et en solution fertilisante permet au tapis d'assurer sa mutation de transplantation en toute sécurité dès lors que l'eau et les solutions nutritives sont apportées plus particulièrement pendant les 4/5 premières semaines.

**Revendications**

1. Support de culture (1) pour culture de gazon en plaques ou en tapis contenant des graines ou des rhizomes, et constitué essentiellement de bagasse de canne à sucre broyée (4).

2. Support de culture (1) pour culture de gazon en plaques ou en tapis contenant des graines ou des rhizomes, et constitué essentiellement de bagasse de canne à sucre broyée (4) mélangée à de la cendre de canne issue de fours de génération.

3. Support de culture (1) selon la revendication 1, caractérisé en ce qu'il contient des graines de gazon dans une proportion de 20 à 100 grammes par m² ou des rhizomes à une densité de 50 à 100 boutures par m².

4. Support de culture (1) selon la revendication 2, caractérisé en ce qu'il contient de 30 à 50% de cendre de bagasse issue du four de génération et contient des graines de gazon dans une proportion de 20 à 100 grammes par m² ou des rhizomes à une densité de 50 à 100 boutures par m².

5. Support de culture (1) selon l'une des revendications 1, 2, 3 ou 4, ayant un pH neutre corrigé par apport de chaux calcaire.

6. Utilisation du support de culture (1) selon l'une des revendications 1 à 5 avec un filet à mailles de plastique ou autre (6) servant à rendre solidaires les graines de gazon ou les rhizomes du support de culture (1) pendant la période de culture par utilisation de pierres, tringles ou fiches (7).

7. Utilisation du support de culture (1) selon la revendication 6, dans laquelle on fait intervenir un arrosage et un engrais liquide ou soluble afin de provoquer la germination des graines ou la pousse des rhizomes.

8. Tapis ou plaque de gazon dont le support de culture (1) est conforme à l'une des revendications 1 à 5.

**Patentansprüche**

1. Kulturträger (1) zum Kultivieren von Rasen in der Form von Samen oder Rhizomen enthaltenden Stücken oder Matten und im wesentlichen aus gemahlener Zuckerrohrbagasse (4) bestehend.

2. Kulturträger (1) zum Kultivieren von Rasen in der Form von Samen oder Rhizomen enthaltenden Stücken oder Matten und im wesentlichen aus gemahlener Zuckerrohrbagasse (4) bestehend, die mit Rohrasche aus dem Produktionsofen gemischt ist.

3. Kulturträger (1) nach Anspruch 1, dadurch gekenneichnet, daß er Rasensamen in einem Verhältnis von 20 bis 100 Gramm pro m² oder Rhizome mit einer Dichte von 50 bis 100 Wurzelstecklingen pro m² enthält.

4. Kulturträger (1) nach Anspruch 2, dadurch gekennzeichnet, daß er 30 bis 50% Bagassenasche aus dem Produktionsofen enthält und daß er Rasensamen in einem Verhältnis von 20 bis 100 Gramm pro m² oder Rhizome mit einer Dichte von 50 bis 100 Wurzelstecklingen pro m² enthält.

5. Kulturträger (1) nach einem der Ansprüche 1, 2, 3 oder 4, mit einem durch Zusatz von kalkigem Kalk berichtigten neutralen pH-Wert.

6. Verwendung des Kulturträgers (1) nach einem der Ansprüche 1 bis 5 mit einem Netz aus Kunststoff oder einem anderen Material (6), wobei das besagte Netz zur Verbindung der Rasensamen bzw. -rhizome des Kulturträges (1) während der Kultivationszeit durch Verwendung von Steinen, Stäben oder Stiften (7) dient.

7. Verwendung des Kulturträgers (1) nach Anspruch 6, wobei man für Bewässerung und Auftrag eines flüssigen oder löslichen Düngemittels sorgt, um das Keimen der Samen oder Wachstum der Rhizome zu bewirken.

8. Rasenmatte oder -stück, wobei der Kulturträger (1) einem der Ansprüche 1 bis 5 entspricht.

## Claims

1. Culture support (1) for cultivating lawn in the form of sods or mats containing seeds or rhizomes and consisting essentially of crushed sugar cane bagasse (4).

2. Culture support (1) for cultivating lawn in the form of sods or mats containing seeds or rhizomes and consisting essentially of crushed sugar cane bagasse (4) mixed with cane ash from the generator furnace.

3. Culture support (1) according to claim 1, characterised in that it contains lawn seeds in a proportion of 20 to 100 grams per m² or rhizomes at a density of 50 to 100 cuttings per m².

4. Culture support (1) according to claim 2, characterised in that it contains 30 to 50% bagasse ash from the generator furnace and contains lawn seeds in a proportion of 20 to 100 grams per m² or rhizomes at a density of 50 to 100 cuttings per m².

5. Culture support (1) according to one of claims 1, 2, 3 or 4, having a neutral pH corrected by the addition of calcic lime.

6. Utilisation of culture support (1) according to one of claims 1 to 5 with a netting made of plastic or some other material (6), serving to link the lawn seeds or rhizomes of culture support (1) during the culture period by means of stones, rods or pads (7).

7. Utilisation of culture support (1) according to claim 6, in the course of which one causes irrigation and a liquid or soluble fertiliser to be applied, with a view to inducing germination of the seeds or growth of the rhizomes.

8. Mat or sod of lawn, the culture support (1) of which is in accordance with one of claims 1 to 5.